# EUROPÄISCHE PATENTSCHRIFT

(11) **EP 3 901 239 B1**
(45) Veröffentlichungstag und Bekanntmachung des Hinweises auf die Patenterteilung: **03.12.2025**
(21) Anmeldenummer: 20170727.0
(22) Anmeldetag: 21.04.2020
(51) Int. Cl.: C12C 11/11, C12C 13/00, B67C 3/32, B67C 3/06

(54) **VERFAHREN ZUM BETREIBEN EINER ANORDNUNG ZUM VERGÄREN UND ABFÜLLEN VON BIER**
METHOD FOR OPERATING AN ARRANGEMENT FOR FERMENTATION AND FILLING BEER
PROCÉDÉ DE FONCTIONNEMENT D'UN AGENCEMENT DESTINÉ À LA FERMENTATION ET À LA MISE EN BOUTEILLE DE LA BIÈRE

(43) Veröffentlichungstag der Anmeldung: 27.10.2021
(73) Patentinhaber: Thrun, Rüdiger, 87484 Nesselwang (DE)
(72) Erfinder: Thrun, Rüdiger, 87484 Nesselwang (DE)
(74) Vertreter: Specht, Peter

(56) Entgegenhaltungen:
- WO-A1-2007/071224
- DE-A1- 10 003 155
- DE-A1- 10 028 290

## Beschreibung

Die Erfindung betrifft eine Anordnung zum Vergären und Abfüllen von Bier als Teil einer Vorrichtung zum Brauen und sowie ein Verfahren zum Ausführen dieser Anordnung.

Bei einem bekannten Verfahren wird das beim Gären entstehende Kohlenstoffdioxid abgesaugt und entweder verworfen oder ggf. aufbereitet, um dem Bier am Ende des Brauprozesses und/oder beim Zapfen wieder zugesetzt zu werden.

Die DE 100 03 155 A1 offenbart eine gattungsgemäße Anordnung zum Vergären und Abfüllen von Bier. Dabei wird die bei der Vergärung entstandene Kohlensäure wird zunächst im oberen Sammelbereich 73 des Gärbehälters 59 gesammelt. Sodann wird die Kohlensäure unter Beibehaltung des Innendrucks im Gärgefäß 59 über die Kohlensäureleitung 74 abgeleitet. Weiter wird die Kohlensäure in einem Filter 91 gereinigt und durch einen nachgeschalteten Verdichter 92 verdichtet und in einem Kohlensäurevorratsbehälter 93 zwischengespeichert, von dem sie der Kohlensäure-Imprägnierungsleitung 85 bedarfsgemäß zugeleitet wird.

Die Aufgabe der Erfindung wird darin gesehen, ein Verfahren zum Betreiben einer Anordnung zum Abfüllen von Bier derart weiterzuentwickeln, dass das beim Gären entstandene Kohlenstoffdioxid einem zusätzlichen Nutzen zugeführt wird.

Die erfindungsgemäße Anordnung dient dem Abfüllen von Bier als Teil einer Vorrichtung zum Brauen wobei die Anordnung einen Gärbehälter und eine Abfüllvorrichtung umfasst. Zugleich beschreibt ein erfindungsgemäßes Verfahren das Betreiben einer solchen Anordnung.

Dabei ist der Gärbehälter typischerweise so ausgebildet, dass ein Bierraum im unteren Teil des Gärbehälters und ein Gasraum im oberen Teil des Gärbehälters angeordnet ist. Dabei sind die Begriffe Bierraum und Gasraum als Bereiche zu verstehen, die jeweils je nach Füllhöhe variieren können. Der Gärbehälter weist daher keine räumliche Trennung zwischen Bierraum und Gasraum auf.

Der Gärbehälter kann aus unterschiedlichen Materialien gefertigt sein, vorzugsweise jedoch aus Edelstahl oder Kupfer.

Der Gärbehälter kann mit einem Volumen von bereitgestelltem Bier von kleiner als 200 I, vorzugsweise kleiner als 150, beispielsweise 60 I, befüllt werden, wobei das Volumen als ein maximal-sinnvoller Befüllungsgrad zu verstehen ist, denn ein Mindestvolumen muss für einen Gasraum stets freigehalten werden. Der Fachmann kennt Gärbehälter dieser Größenordnung als Teil einer Kleinbrauanlage, welche auch bevorzugt im vorliegenden erfindungsgemäßen Verfahren betrieben wird.

Der Bierraum weist während des Vergärungsprozesses bereitgestelltes Bier auf. Der Gasraum weist während des Vergärungsprozesses zur Bereitstellung des Bieres entstandenes Kohlenstoffdioxid auf.

Während des Vergärungsprozesses wird der Gärbehälter und die Abfüllvorrichtung allmählich unter einen voreingestellten Druck gesetzt. Der Druck wird durch das während des Vergärungsprozesses bereitgestellte Kohlenstoffdioxid erzeugt. Die Steuerung des Druckes erfolgt erfindungsgemäß durch eine Steuer- und/oder Regelvorrichtung, welche zur Ausführung der vorgenannten Druckregelung ausgebildet ist. Die Steuer- und/oder Regelvorrichtung kann dabei beispielsweise lediglich Teil eines Überdruckventils sein oder aber eine komplexere Steuerung und/oder Regelung weiterer Ventile entlang verschiedenen Leitungen, z.B. Zu- und Ableitungen von Bier oder auch Gasleitungen, der erfindungsgemäßen Anlage umfassen.

Der Druck kann sich vorzugsweise gleichmäßig auf den Gärbehälter und die Abfüllvorrichtung verteilen. Alternativ kann auch der Druck zuerst im Gärbehälter, ggf. mit einem über dem eigentlichen Solldruck liegendem Überdruck, erzeugt werden und anschließend unter Zuleitung in die Abfüllvorrichtung bereitgestellt werden.

Der voreingestellte Druck ist als Überdruck gegenüber einem Außendruck zu verstehen und kann während des Abfüllvorgangs konstant gehalten werden.

Die Abfüllvorrichtung kann typischerweise eines oder mehrere Fässer aufweisen, welche nach Definition der vorliegenden Erfindung ebenfalls Teil der Abfüllvorrichtung sind.

Der Begriff eines Fasses umfasst im Sinne der vorliegenden Erfindung umfasst vorzugsweise Tanks in den üblichen Abfüllgrößen, besonders bevorzugt bis zu 200 I Abfüllvolumen oder mehr, vorzugsweise jedoch zwischen 5-100 I Abfüllvolumen.

Der voreingestellte Druck kann während des Vergärungsprozesses und des Abfüllvorgangs durch Einleiten von Kohlenstoffdioxid in die Fässer eingestellt und konstant gehalten werden.

Die Anordnung kann eine Gasleitung aufweisen, die den Gasraum des Gärbehälters mit der Abfüllvorrichtung verbindet. Die Gasleitung kann mit einem Ventil ausgebildet sein, welches vorzugsweise durch die Regel- und/oder Steuervorrichtung eingestellt, insbesondere angesteuert, werden kann.

Die Abfüllvorrichtung weist dabei zumindest eines der vorgenannten Fässer auf, wobei der voreingestellte Überdruck während des Vergärungsprozesses in der Anordnung einschließlich dem Fass durch unmittelbares Überleiten des Kohlendioxids vom Gärbehälter in die Abfüllvorrichtung eingestellt und während des Abfüllvorgangs konstant gehalten wird.

Die Ansteuerung der einzelnen Ventile der Anordnung kann digital durch die Steuer- und/oder Regelvorrichtung erfolgen, beispielsweise so, dass die Ansteuerung über eine Zentralsteuerung der Anlage erfolgt die ihrerseits mittels einer Fernbedienung oder einer bereitgestellten Anwendung über ein Mobiltelefon angesteuert werden kann.

Der voreingestellte Druck kann im Bereich zwischen 1,5 bar und 2,5 bar aufgebaut und gehalten werden, vorzugsweise zwischen 1,8 bar und 2,5 bar.

Der Rohrstutzen einer Abfüllleitung kann, ausgehend von einem Bodenbereich des Gärbehälters, in den Gärbehälter ragen.

Es ist von Vorteil, wenn ein Überdruck in der Abfüllvorrichtung in den Gasraum zurückgeführt werden kann, um einen einheitlichen Druck im Gärbehälter und in der Abfüllvorrichtung aufzubauen und insbesondere auch während des Abfüllens der Fässer zu halten.

Über die Gasleitung kann insbesondere der Eigendruck der Anordnung durch bereitgestelltes Kohlenstoffdioxid aus dem Gärbehälter der Abfüllvorrichtung zugeführt werden.

Dabei ist auch vorteilhaft, wenn die Anordnung an der Gasleitung ein Ventil aufweist und optional dazu einen Drucksensor aufweist wobei der Drucksensor durch ein Messsignal eine Schaltung des Ventils auslöst, z.B. bei einem Druckanstieg während der Abfüllung.

Vorteilhaft ist auch, wenn das vorgenannte Ventil derart ausgebildet ist, dass die Gasleitung geöffnet ist, wenn über eine weitere Leitung, die vorgenannte Abfüllleitung, die Abfüllung von Bier vom Gärbehälter in ein Fass der Abfüllanlage erfolgt. Damit kann ein gleichbleibender Druck in der Vorrichtung automatisch gehalten werden.

Eine weitere vorteilhafte Ausgestaltung der Vorrichtung liegt darin, dass die Abfüllvorrichtung ein Überdruckventil aufweist, welches z.B. im Fall eines gärungsbedingten Überdrucks, welcher größer ist als der Solldruck, Kohlendioxid ablassen kann.

Ein derart ansteuerbar und/oder geregelt ausgebildetes Überdruckventil gewährleistet darüber hinaus ein sicheres Betreiben der Anordnung.

Die Anordnung kann eine Bierleitung aufweisen. Über die Bierleitung kann der Gärbehälter, insbesondere unvergorenes Bier aus der Vorrichtung zum Brauen unter Zugabe von Hefe befüllt werden. Vorzugsweise weist das Bier hierbei eine Temperatur zwischen 15° C und 20° C auf. Sodann kann im Gärbehälter eine Warmvergärung über einen voreingestellten Zeitraum, von vorzugsweise 3 - 5 Tage erfolgen.

Vorteilhaft ausgebildet kann die Bierleitung auch als Ableitung ausgebildet sein, beispielsweise um nicht-abgefüllte Bierreste und Hefeablagerungen aus dem

Gärbehälter abzuführen. Auch in dieser Bierleitung kann vorteilhaft ein steuer- und/oder regelbares Ventil angeordnet sein. Gleiches gilt für die Abfüllleitung und die Gasleitung.

Die Anordnung kann einen Bierfuß ausweisen, angeordnet im unteren Bereich des Bierraums, zu dem Zweck, nicht abgefülltes Bier oder abgesetzte Hefe zur Entsorgung bei Reinigung des Gärbehälters aufzufangen.

Die Anordnung kann vorteilhaft ausgebildet sein, nach der Warmvergärung eine Kaltvergärung durchzuführen.

Die Anordnung kann eine Kühlvorrichtung zur Kühlung des im Gärbehälter bereitgestellten Biers und Kohlenstoffdioxids, z.B. in Vorbereitung einer Kaltvergärung, aufweisen.

Vorteilhaft kann die Kühlvorrichtung und/oder der Gärbehälter einen Temperatursensor umfassen, der die Kühlvorrichtung überwacht, sodass eine Kühlung d es im Gärbehälter bereitgestellten Biers zwischen 2°C und 10°C, vorzugsweise zwischen 2°C und 4°C, erreicht wird- Dies kann vorzugsweise über einen Zeitraum zwischen 2-10 Tagen erfolgen.

Der Temperatursensor kann ebenfalls digital ausgebildet sein, zum Beispiel zur Temperaturanzeige mittels einer Fernbedienung oder einer bereitgestellten Anwendung über ein Mobiltelefon.

Die Kühlvorrichtung kann ein Kühlgehäuse aufweisen, welches den Gärbehälter umschließt. Es kann auch eine Kühlung durch Eiswasser in einer Doppelwandung um den Bierraum des Gärbehälters herum erfolgen, um dessen Kühlung zu erreichen. Die Doppelwandung entlang des Gärbehälters kann nur bereichsweise angeordnet sein, z.B. als Halbschale.

Um den Gärbehälter zu reinigen, ist es vorteilhaft, wenn der Gärbehälter mehrteilig ausgebildet ist.

Von Vorteil ist weiter, wenn der Gärbehälter einen Sprühkopf am oberen Teil des Gasraums und ein Reinigungsventil zum Einleiten eines Reinigungsmediums aufweist.

Diese Anordnung ermöglicht ein Reinigen des Gärbehälters zum Beispiel bei leichter Verunreinigung nach einer Vergärung, ohne dass der Gärbehälter geöffnet bzw. demontiert werden muss.

Ein Teil der Abfüllanlage ist eines oder mehrere Fässer, wobei jeweils ein Fass einen Sack aufweisen kann, in welchen CO2 und das Bier mediumsdicht aus dem Gärbehälter einleitbar ist.

Der Sack kann vorzugsweise einen sogenannten einen Stechdeckel mit einer Halteplatte aufweisen, welche in einer Öffnung eines Gehäuses des Fasses eingesetzt ist.

Das Fass kann zudem einen Gasanschluss aufweisen zum Anschließen von Druckluft zur Gaseinleitung in den Zwischenraum zwischen Sack und Gehäuse, ohne dass das eingeleitete Gas in im Sack befindliche Bier in Kontakt kommt.

Der Gasanschluss kann vorzugsweise von der Halteplatte beabstandet sein, so dass eine Gaseinleitung in den Zwischenraum zwischen Sack und Gehäuse radial zur Einleitungsrichtung des Bieres erfolgt.

Die Abfüllanlage kann aus mehreren miteinander koppelbaren modularen Einheiten, insbesondere jeweils aus Gärbehälter und Abfüllvorrichtung bestehen, welche jeweils für sich ein geschlossenes System bilden können.

Die Erfindung wird nachstehend anhand der Zeichnung näher erläutert. Die Zeichnung zeigt Ausführungsbeispiele der Erfindung. Hierbei stellen dar:
Fig. 1 eine schematische dreidimensionale Ansicht einer Anordnung zum Brauen von Bier;
Fig. 2 eine schematische Ansicht eines Fasses zum Anschluss an die Abfüllvorrichtung;
Fig. 3 eine schematisch-vereinfachte Ansicht einer erfindungsgemäßen Anordnung zum Vergären und Abfüllen von Bier; und
Fig. 4 eine schematische Ansicht einer modularen Anordnung zum Vergären und Abfüllen von Bier.

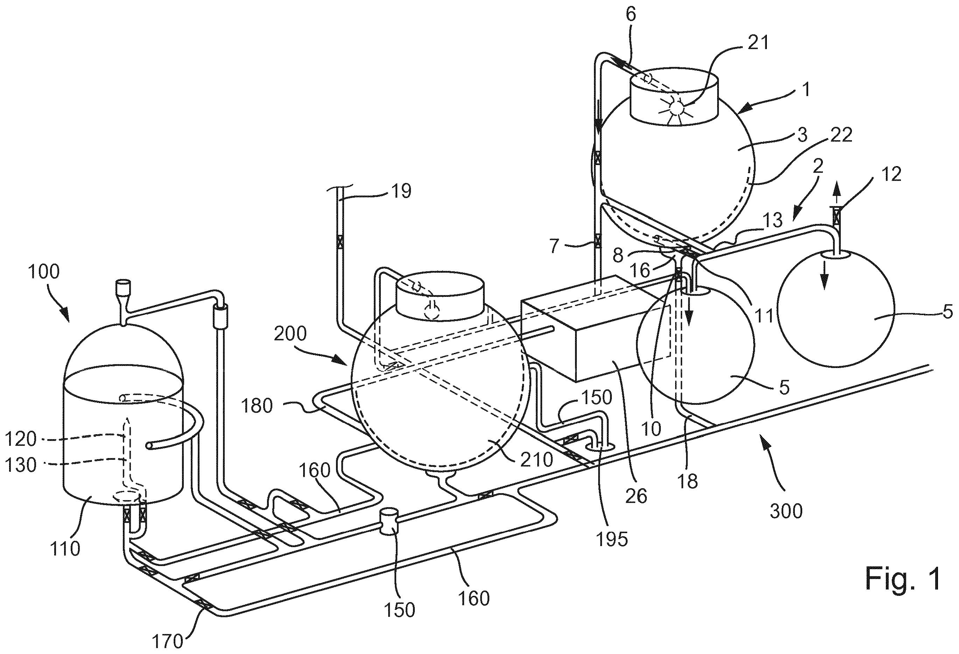

Fig. 1 zeigt eine Vorrichtung zum Brauen von Bier umfassend einen Maischebehälter 100, einen Würzekochbehälter 200 und eine Anordnung zum Vergären und Abfüllen von Bier 300.

Die Vorrichtung zum Brauen weist einen Maischebehälter 100 auf, es können jedoch auch mehrere Maischebehälter übereinander angeordnet sein. Über ein Rohrleitungssystem ist der Maischebehälter 100 mit dem Würzekochbehälter 200 verbunden, in welchen die Maische nach dem Einmaischen und ggf. nach dem Läutern über eine Pumpe 150 abgeleitet wird.

Am Bodenbereich des Maischebehälters 100 ist eine erste Sprühvorrichtung auf dem Trägersieb 110 angeordnet. Die erste Sprühvorrichtung 120 weist ein vertikal angeordnetes Sprührohr 120 auf. Dieses kann sich als Lanze über zumindest 50% der Höhe des Maischebehälters 100 erstrecken. Das Sprührohr ist endständig verschlossen weist randseitig Öffnungen zum Einleiten von Flüssigkeit, insbesondere Wasser, in die Maische auf. Das Sprührohr 130 ist vorzugsweise endständig spitz zulaufend. Durch die erste Sprühvorrichtung 120 werden Nester innerhalb des Maischekuchens ausgelaugt, welche ohne die Sprühvorrichtung 130 nicht ausgelaugt würden, wie sich bei Tests herausgestellt hat.

Weitere Sprühvorrichtungen sind randseitig am Maischebehälter zum Einleiten von Wasser beim Einmaischen angeordnet. Ein deckelseitiger Sprühkopf kann zur Reinigung oder als weitere Sprühvorrichtung zum Einleiten von Wasser zum Einmaischen genutzt werden.

Der Begriff Maische kann alle Arten von Maische und auch Pellets wie Hopfenpellets umfassen.

In dem Maischeprozess kommt es in der Regel zu einer Trübung der Flüssigkeit durch Heraufschwemmen kleiner Teilchen. Damit diese Teilchen beim Ablassen beispielsweise der Bierwürze zurückgehalten werden, kann der Maischebehälter am Bodenbereich ein Trägersieb und/oder ein Partikelsieb aufweisen. Innerhalb des Maischebehälters kann auch noch ein Filterkorb angeordnet sein.

Der Maischebehälters 100 ist über ein Rohrleitungssystem 160 mit dem Würzekochbehälter 200 verbunden, welches mit Ventilen 170 mit Ventilschaltungen zur Regelung des Prozesses bzw. des Verfahrens im Maische- und/oder Würzekochbehälter ausgerüstet ist. Bei Betrieb wird im Würzekochbehälter 200 mittels eines Gasbrenners oder eine andere geeignete Heizvorrichtung, z.B. eine elektrische Heizvorrichtung, Wasser auf einzelne Temperaturstufen erwärmt. Vom Würzekochbehälter 200 wird das Wasser über das Rohrleitungssystem von unten her in den Maischebehälter 100 geleitet. Die Maische schwimmt dabei anfänglich auf dem Wasser auf. Der Würzekochbehälter 200 wird zusätzlich zur Funktion des Kochens der Würze dazu benutzt, die notwendige Wassertemperatur in den verschiedenen Maischebehältern 100 entweder zu halten oder auch zu erhöhen, je nach Brauvorgang. Der Würzekochbehälter 200 weist einen Doppelmantel auf, in welchem Wasser erhitzt wird.

Nach Abschluss des Sudvorgangs in den Maischebehältern 100 wird aus dem Doppelmantel 210 des Würzekochbehälters 200 heißes Wasser entnommen und kann von oben her über eine Sprühvorrichtung über die Maische geführt werden. Die gesättigte Restflüssigkeit kann von den Maischebehältern 100 in den Würzekochbehälter 200 zum Würzekochprozess hinüber gepumpt bzw. gedrückt werden. Dies wird so lange durchgeführt, bis die gewünschte Wassermenge vor dem Kochen des Suds erreicht ist. Danach wird der Vorgang gestoppt und der Sud im Würzekochbehälter 200 gekocht. Parallel zum Kochen wird der Maischebehälter 100 entleert und kann gereinigt werden und kann bis zum Ende des laufenden Kochvorgangs wieder neu beschickt werden. Der Maischebehälter 100 kann dann mit vorgewärmtem Wasser aus dem Doppelmantel des Würzekochbehälters 200 wieder zum neuen Einmaischen genutzt werden, um somit einen weiteren Sud vorzubereiten. Sofern der Kochvorgang des ersten Sudes abgeschlossen ist wird das unvergorene Bier in den Garbehälter 1 der erfindungsgemäßen Anordnung zum Vergären und Abfüllen von Bier 300 umgepumpt. Hierzu kann der Sud vor dem Überleiten in den Gärbehälter über Einleiten von Kühlwasser in den Doppelmantel 210 heruntergekühlt werden. Erkennbar kann sich der Doppelmantel 210 nur über einen Teilbereich z.B. als Halbschale über den unteren Bereich des Würzekochbehälters erstrecken.

Der Doppelmantel 210 kann beispielsweise eine Kühlleitung 180 zum Einleiten von Eiswasser aufweisen, sowie eine Leitung 160 zum Einleiten von Leitungswasser und eine Ableitung 190 zum Ableiten von Wasser aus dem Doppelmantel in einen Gully bzw. Abfluss. Über die Leitung 160 kann auch heißes Wasser aus dem Doppelmantel 210 in den Maischebehälter 100 geleitet werden.

Die erfindungsgemäße Anordnung dient dem Vergären und Abfüllen von Bier als Teil der vorgenannten Vorrichtung zum Brauen. Sie zeigt in Fig. 1 den Gärbehälter 1 und eine Abfüllvorrichtung 2.

Nach dem Würzekochen wird das unvergorene Bier auf ca. 20°C heruntergekühlt, es kann eine Hopfung durch Hopfenzugabe erfolgen, und es erfolgt eine Warmvergärung unter Zugabe von Hefe bei ca. 11-25°C, wobei eine genauere Differenzierung sich nach der Biersorte richtet. Diese kann mehrere Tage andauern. Zur Vergärung kann Hefe, z.B. als Suspension über eine verschließbare Zugabeöffnung 28 in den Gärbehälter 1, zugeführt werden.

Sodann erfolgt eine Kaltvergärung bei Temperaturen zwischen 2-10°C. Hierfür wird die Temperatur des Bieres im Gärbehälter 1 verringert. Dies kann über einen Doppelmantel, analog zum Sudbehälter 200, erfolgen und/oder über einen Kühlschrank.

Schließlich erfolgt das Abfüllen bei konstantem Überdruck unter energetisch günstiger Verwendung des im Gärprozess hergestellten CO₂.

Nachfolgend wird die erfindungsgemäße Anordnung 300 im Detail beschrieben:
Der Gärbehälter 1 kann, insbesondere im befüllten Zustand, in einen Bierraum im unteren Teil des Gärbehälters 1 und einen Gasraum im oberen Bereich des Gärbehälters 1 unterteilt werden. Die Gesamtheit der beiden vorgenannten Räume bildet einen einheitlichen Hohlraum, welcher durch ein Gehäuse 3 des Gärbehälters 1 begrenzt wird. Der Übergang zwischen beiden Räumen bildet die gas-flüssig Phasengrenze.

Der Gärbehälter 1 kann als Druckbehälter ausgebildet sein. Durch das während des Vergärungsprozesses bereitgestellte Kohlenstoffdioxid wird der Gärbehälter 1 und die Abfüllvorrichtung 2 unter einen voreingestellten Druck gesetzt, der durch das bereitgestellte Kohlenstoffdioxid erzeugt wird. Es handelt sich um einen Überdruck im Vergleich zum Umgebungsdruck.

Der voreingestellte Druck wird während des Abfüllvorgangs konstant gehalten. Fig. 1 zeigt zudem Fässer 5 als Teil der Abfüllvorrichtung 2 auf. Dies kann zumindest ein Fass oder mehrere Fässer 5 sein, die beispielsweise aus Edelstahl gefertigt sein können.

Der Druck wird während des Vergärungsprozesses sukzessive durch entstehendes Kohlendioxid aufgebaut und die Abfüllvorrichtung einschließlich etwaiger angeschlossener Fässer wird mit CO₂ bis zum Erreichen eines Solldrucks geflutet. Beim Abfüllen wird der Überdruck bzw. Solldruck konstant gehalten.

**In** Fig. 1 wird das unvergorene Bier über die Bierleitung 18, welche mit dem Zuleitungsventil 10 versehen ist, in einen trichterförmigen Bierfuß 16 im Bodenbereich des Gärbehälters 1 eingeleitet. Der Bierfuß ist dabei lediglich optional und dient u.a. dem Sammeln von Trübstoffen.

Fig. 1 zeigt weiter eine Gasleitung 6 und ein erstes Ventil 7 auf. Dieses erste Ventil kann derart angesteuert oder geregelt werden, dass ein konstanter Druck im Gärbehälter 1 und in der Abfüllvorrichtung 2 nach Aufbau eines voreingestellten Drucks, beispielsweise zwischen 1,5 bar und 2,5 bar, vorzugsweise zwischen 1,8 bar und 2,5 bar gehalten wird.

Die Gasleitung 6 mündet in einen Rohrstutzen 8 welcher in den Gärbehälter 1, ausgehend von einem gedachten Bodenraum des Gärbehälters 1, hineinragt. Der Rohrstutzen 8 kann optional teleskopartig ausgebildet sein, so dass die Position der Mündung des Rohrstützens 8 in der Höhe variabel ist und angepasst werden kann.

Optional oder zusätzlich kann der Gärbehälter 1 einen nicht näher dargestellten Füllstandssensor aufweisen, um eine Überfüllung des Gärbehälters 1 zu verhindern.

Die optionale Ventilsteuerung des ersten Ventils 7 kann vorteilhaft digital ansteuerbar ausgebildet sein, beispielsweise mittels einer Zentralsteuerung, bzw. einer Steuer- und/oder Regelvorrichtung, der Anlage.

Die Abfüllanlage 1 der Fig. 1 weist weiterhin ein Überdruckventil 12 auf, welches derart geregelt oder angesteuert werden kann, dass das Überdruckventil 12 nach Aufbau eines über den voreingestellten Druck hinausgehende Druckdifferenz geöffnet wird.

Diese Anordnung ist vorteilhaft um einen einheitlichen Gasdruck zu gewährleisten. Da das gebildete CO₂ bei der Vergärung je nach Art Maischezusammensetzung unterschiedlich umfangreich sein kann wird durch die vorgenannte Maßnahme das Verfahren kontrollierbarer.

Auch das Überdruckventil 12 kann optional digital ansteuerbar ausgebildet sein, beispielsweise mittels einer Fernbedienung oder eine bereitgestellte Anwendung mittels der besagten Zentralsteuerung. Es ist allerdings auch möglich, dass das Überdruckventil 12 lediglich durch eine lokale Steuer- und/oder Regelvorrichtung auf einen vorbestimmten Überdruck eingestellt und entsprechend geregelt und/oder gesteuert ist.

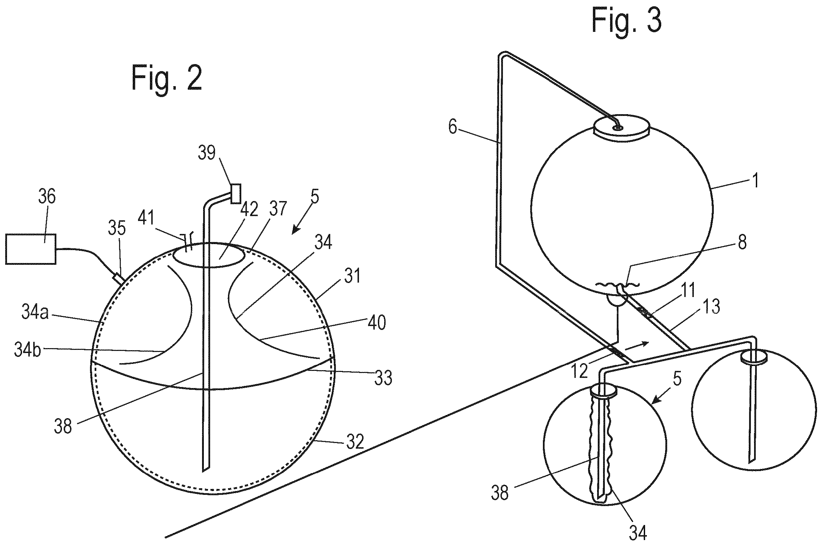

Fig. 3 zeigt in einer weiteren vereinfachten Ansicht der Vorrichtung der Fig. 1 mit einer Gasleitung 6, welche über die Abfüllleitung 13 für das Bier in den Rohrstutzen 8 mündet.

Die Abfüllleitung 13 weist ein Ventil 11 auf. Während des Druckaufbaus beim Gärprozess bis zum Erreichen des Solldrucks ist dieses Ventil 11 geschlossen und trennt den flüssigen Bereich vom gasförmigen Bereich zu Beginn des Gärprozesses bis zum Zeitpunkt des Abfüllens. Das Ventil 11 wird erst geöffnet, wenn der Gärprozess abgeschlossen ist. Das Überdruckventil 12 in der Gasleitung 6 stellt hingegen die Druckverhältnisse insbesondere während des Gärprozesses und darüber hinaus auch während des Abfüllprozesses ein.

Das Ventil 11 wird bei Initiierung des Abfüllvorgangs durch eine Steuerung oder Regelung einer nicht-dargestellten Steuer- und/oder Regelvorrichtung geschaltet werden, so dass die Abfüllleitung 13 geöffnet wird und Bier über diese Leitung in die Fässer 5 eingeleitet wird.

Die Anordnung der Abfüllleitung 13 und der Gasleitung 6 ist somit vorteilhaft, weil dadurch ein Druck-Gleichgewicht zwischen dem Gärbehälter 1 und der Abfüllanlage 2 hergestellt werden kann.

Das Bier kann dabei beim Abfüllen bei geöffneter Abfüllleitung 13 in die Fässer 5 laufen, wobei zugleich ein Überdruck herrscht, so dass im Bier enthaltenes CO₂ beim Abfüllen aufgrund des Überdrucks nicht entweichen kann und das Bier besonders spritzig bleibt.

Analog zum Ventil 6 kann auch das Ventil 11 über eine in der in der Anlage integrierte Zentralsteuerung, als bevorzugte Variante einer Steuer- und/oder Regelvorrichtung, angesteuert werden, welche ihrerseits vorzugsweise über eine Fernbedienung oder ein Mobiltelefon, z.B. im Rahmen eines automatischen Brauprogramms, z.B. als App, ansteuerbar ist.

Das Überdruckventil 12 ist vorzugsweise auf einen Festwert eingestellt, welcher dem Überdruck entspricht, welcher während des Vergärens und des Abfüllens konstant gehalten werden soll. Sofern der Druck während des Vergärens oder des Abfüllens den vor eingestellten Wert überschreitet, öffnet sich das Überdruckventil und lässt überschüssiges Gas bis zum Erreichen des Sollwertes ab.

Weiterhin im Kopfbereich des Gärbehälters 1 ist ein Sprühkopf 21 vorgesehen, welcher über die Gasleitung 6 entgegen der Ableitungsrichtung des Gases mit Reinigungsflüssigkeit gespeist werden kann. Diese Reinigungsflüssigkeit kann über eine Zuleitung 19, siehe Fig. 1, in die Anlage geleitet werden und kann nach Beendigung des Gärprozesses und der folgenden Abfüllung zur Reinigung des leeren Gärbehälters eingefüllt werden.

Das Gehäuse 3 des Gärbehälters kann zu mindestens zweiteilig aufgebaut sein und beispielsweise aus zwei Behälterhälften bestehen, welche über einen Spannring 20, beispielsweise in Form einer Spundverbindung miteinander mediumsdicht zum Gehäuse 3 verbunden sind.

Sofern eine umfassende Reinigung möglich ist, kann dadurch der Gärbehälter sehr einfach geöffnet und gereinigt werden.

Sofern ein Doppelmantel 22 vorgesehen ist, kann dieser mit Kühlwasser oder Eiswasser befüllt werden, z.B. um zusätzliche Kühlung bei Temperaturen zwischen 10-15°C im Gärbehälter 1. Eine Zuleitung von Eiswasser kann über die gleiche Leitung bei Temperaturen zwischen 0 bis 10°C vorzugsweise zwischen 1-3°C in den Doppelmantel erfolgen. Der Doppelmantel kann ebenfalls Zu- und Ableitungen für ein Kühlmedium aufweisen.

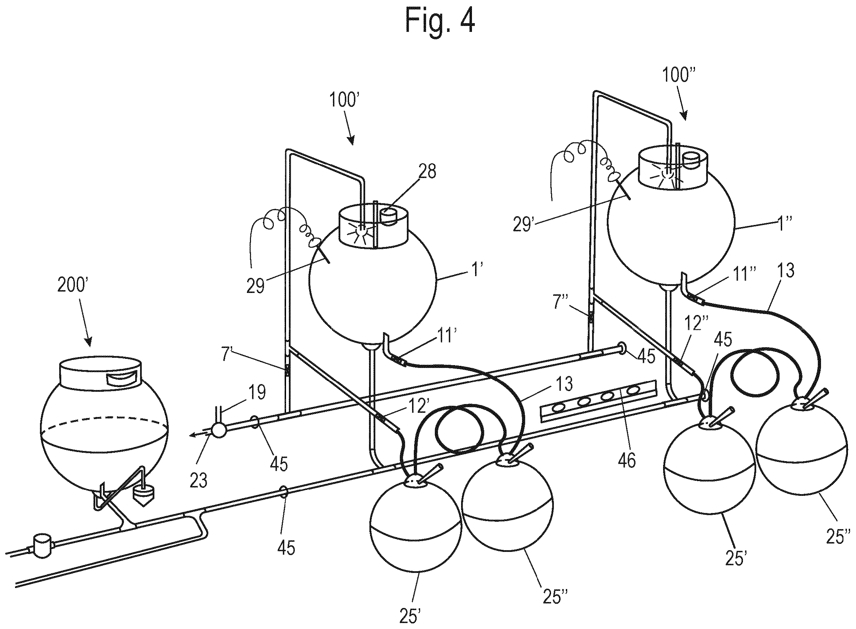

Zur Überwachung der Prozesstemperatur kann am Gärbehälter ein Temperatursensor 29 angeordnet sein, wie dies z.B. in Fig. 4 dargestellt ist.

Zur Erzeugung dieses Eiswassers weist die Vorrichtung 300 zudem ein Kühlaggregat 26 auf, welches das über den Hausanschluss zugeleitete Wasser zusätzlich auf eine gewünschte Zieltemperatur hinunterkühlt.

Als Fässer 5 werden in der Abfüllvorrichtung 2, Fässer einer besonderen Ausgestaltung eingesetzt.

Figur 2 zeigt ein durch die Abfüllanlage befüllbares Fass 5. Das Fass weist ein Gehäuse aus einem formstabilen Material, beispielsweise aus Kunststoff oder insbesondere aus Metall, vorzugswiese aus Edelstahl auf. Das Fass der Figur 2 ist im Wesentlichen einer Kugelform nachempfunden, wobei das Gehäuse 31 in zwei Gehäuseteile 32 in Form von Halbschalen zerlegbar ist, welche vorzugsweise über eine Spundverbindung und einen Spannring 33 miteinander zum Gehäuse 31 einer mediumsdichten Verbindung verbindbar sind. An einer Stelle weist das Gehäuse 31 eine Aufnahmeöffnung zur Aufnahme eines Stechdeckels 37 eines gegenüber dem Gehäuse 31 lösbar angeordneten Einsatzes 40 auf. Der Einsatz 40 weist neben dem Stechdeckel einen Sack aus einem expandier- und/oder komprimierbaren Material auf. Der Sack 34 kann beispielweise aus einem Kunststoffmaterial gefertigt sein, z.B. aus einer Kunststofffolie, oder aus einem Kunststoff-Metall-Verbundmaterial. Der Sack kann insbesondere diffusionsdicht gegenüber CO₂ ausgebildet sein, so dass das in Bier enthaltene Kohlendioxid nicht durch die Wandung des Kunststoffsackes entweichen kann.

Weiterhin weist der Stechdeckel eine Halteplatte auf, welche in die Öffnung des Gehäuses 31 eingesetzt ist, und eine erste Zuleitung 38, welche als Hohllanze ausgebildet ist und über welche Bier dem Gärbehälter 1 in Fig. 1 und 3 in das Fass 5, insbesondere in den Sack 34 des Einsatzes 40, einleitbar ist. Die erste Zuleitung 38 weist einen prozessseitigen Prozessanschluss 39 auf mit welchem das Fass an die Abfüllvorrichtung 2 angeschlossen ist und mit welchem das Fass von der Bierleitung der Abfüllanlage 2 getrennt werden kann. Weiterhin weist der Stechdeckel 37, insbesondere die Halteplatte 42, eine zweite Zuleitung 41 zur Verbindung mit der Kohlendioxid-Gasleitung 9 auf, sodass Kohlendioxid über diese zweite Zuleitung 41 in den Sack 34 des Einsatzes 40 geleitet werden kann.

Nach dem Einleiten des Kohlendioxids bläst sich der Sack 34 auf, sodass er an der Innenseite des Gehäuses 31 anliegt. Dieser Zustand des Sackes wird in der Figur 2 mit dem Bezugszeichen 34a dargestellt. Im aufgeblasenen Zustand kann in den Sack 34 nunmehr Bier eingeleitet werden.

Weiterhin weist das Fass 5 einen Druckluftanschluss 35 auf, welcher am Gehäuseteil 32 jenseits der Aufnahmeöffnung des Stechdeckels 37 angeordnet ist und durch welchen Druckluft, beispielsweise über einen Kompressor 36, eingeleitet werden kann. Alternativ zum Druckluftkompressor 36 kann auch eine Gasflasche, beispielsweise Kohlendioxidgasflasche oder Druckluftflasche, vorgesehen sein. Während die Einleitung von Kohlendioxid zum Aufblasen des Sackes 34 in Figur 2 axial also vom Stechdeckel her erfolgt, erfolgt der Druck über die zweite Zuleitung 35 seitlich und jenseits des Stechdeckels wodurch eine optimierte Entleerung des Fasses erfolgen kann. Bezugszeichen 34b zeigt eine Verformung des Sackes 34 unter Einfluss eines randseitigen Druckes ausgeübt durch die Zuleitung von Druckluft über den Zuleitungsanschluss 35. Dieser Zuleitungsanschluss 35 erfolgt in das Gehäuse 31, jedoch außerhalb des Sackes 34 und sorgt daher für eine Verformung des Sackes 34 innerhalb des Gehäuses 31.

Diese konstruktive Ausgestaltung eines Bierfasses ermöglicht einen Austausch des Einsatzes 40 ohne zusätzliche Reinigung des Bierfasses bzw. des Gehäuses 31, sodass das Gehäuse selbst keine lebensmittelberührenden Wände aufweist, welche es zu reinigen gilt. Der Einsatz 40 kann als Single-use Anwendung, also zur einmaligen Benutzung verstanden werden. Nach der Entnahme des Bieres aus dem Fass an einer Zapfanlage kann der Einsatz 40 verworfen werden und das Gehäuse 31 mit einem neuen Einsatz 40 versehen werden. Dieser Einsatz kann für den Nutzer auf unkomplizierte Art und Weise wahlweise durch Öffnen des Gehäuses 31 erfolgen, indem er den Spannring 33 löst und die beiden Gehäuseteile 32 voneinander trennt, oder aber durch Einfädeln des Stechdeckels durch die Gehäuseöffnung in welcher die Halteplatte 42 positioniert wird. Auf diese Wiese kann auch eine unkomplizierte Demontage des Gehäuses erfolgen, sofern der Nutzer die Reinigung des Gehäuses 31 wünscht oder eine bessere Positionierung des Stechdeckels 37 oder der daran abgehenden Zuleitungen 41 für notwendig hält.

Figur 3 zeigt schematisch den Zustand eines Fasses 5 vor dessen Befüllung mit Kohlendioxid und Bier. Der Sack 34 liegt dabei im schlaffen Zustand an der ersten Zuleitung 38 an, zu Beginn des Abfüllprozesses wird zunächst Kohlendioxid über Gasleitung 6 in den Sack 34 geleitet, was zum Expandieren des Sackes innerhalb des Gehäuses des Bierfasses 5 führt. Nach dem Aufblasen des Sackes 34 erfolgt sodann die Zuleitung von Bier aus dem Gärbehälter 1 in den nunmehr aufgeblasenen Sack 34 unter Einhaltung eines konstanten Kohlendioxiddrucks innerhalb der Anlage.

Durch diese Art der Abfüllung kann auf unkomplizierte Art und Weise eine hygienische und zugleich qualitativ hochwertige Vergärung und Abfüllung von Bier in die Fässer 5 erreicht werden.

Die in Fig. 1 und 3 dargestellte Anordnung aus einem Gärbehälter und einer Abfüllvorrichtung bildet im Zusammenspiel mit der Gasleitung 6 und der Abfüllleitung 13 ein in sich abgeschlossenes, insbesondere druckstabiles, System.

Dieses System ist durch mehrere weitere erfindungsgemäße Anordnungen modular, wie dies aus Fig. 4 erkennbar ist, erweiterbar, so dass ein gesonderter Gärprozess in jedem Modul mit einer unterschiedlichen Biersorte erfolgen kann. Dadurch stehen die vorgelagerten Baueinheiten, also der Maischebehälter 100 und der Würzekochbehälter 200, für weitere Brauprozesse zur Verfügung. Dadurch können die Braukapazitäten erweitert werden, sofern ein wachsender Bedarf besteht.

Beim Zapfen des Bieres kann aufgrund des in den Fässern vorgesehenen Sackes ein Gasdruck von außen zugeführt werden, ohne dass kostenintensives CO₂ eingeleitet werden muss. Der Gasdruck wirkt dabei auf den Sack und wird nicht unmittelbar in die Flüssigkeit eingeleitet.

Die modulare Anordnung 100', 100" der Fig. 4 weist einen analogen jedoch vereinfacht dargestellten Aufbau zu Fig. 1 auf. Einzelne Positionierungen z.B. die Position des Überdruckventils 12', 12", können abweichen, wobei die Funktionalität des jeweiligen Bauteils erhalten bleibt. Hierfür kann jeweils eine Einheit aus einem oder mehreren Modulen Prozessanschlüsse 45 aufweisen, mit welchen die Anlage durch weitere Einheiten oder Module erweiterbar ist.

Weiter in Fig. 4 und rein der Vollständigkeit halber ist eine Reinigungsvorrichtung 46 zur Reinigung der Fassanschlüsse der Fässer 5', 5" angeordnet.

### Bezugszeichen

- 1, 1', 1": Gärbehälter
- 2: Abfüllvorrichtung
- 3: Gehäuse

- 5, 5', 5": Fässer
- 6: Gasleitung
- 7, 7', 7": erstes Ventil
- 8: Rohrstutzen

- 11: zweites Ventil
- 12: Überdruckventil
- 13, 13', 13": Abfüllleitung

- 16: Bierfuß
- 18: Bierleitung
- 19: Zuleitung (Reinigungsmedium)
- 21: Sprühkopf
- 22: Doppelmantel
- 23: Ablauf / Gully

- 28: Zugabeöffnung Hefe
- 29: Temperatursensor

- 31: Gehäuse
- 32: Gehäuseteile
- 33: Spannring
- 34: Sack
- 34a: aufgeblasener Zustand
- 34b: schlaffer Zustand
- 35: Druckluftanschluss
- 36: Druckluftkompressor

- 37: Stechdeckel
- 38: Zuleitung
- 39: Prozessanschluss
- 40: Einsatz
- 41: Zuleitung
- 42: Halteplatte

- 45: Prozessanschluss
- 46: Reinigungsvorrichtung

- 100: Maischebehälter
- 110: Trägersieb
- 120: Sprühvorrichtung
- 150: Pumpe
- 160: Rohrleitungssystem
- 170: Ventile
- 180: Kühlleitung (Doppelmantel)
- 190: Ablaufleitung (Doppelmantel)
- 195: Gully
- 200: Würzekochbehälter
- 210: Doppelmantel
- 300: Anordnung zum Vergären und Abfüllen von Bier

## Patentansprüche

1. Anordnung zum Vergären und Abfüllen von Bier als Teil einer Vorrichtung zum Brauen, wobei die Anordung einen Gärbehälter (1) und eine Abfüllvorrichtung (2) umfasst wobei die Anordnung eine Steuer- und/oder Regelvorrichtung aufweist, welche derart ausgebildet ist, dass sowohl der Gärbehälter (1) als auch die Abfüllvorrichtung (2) unter einen voreingestellten Überdruck gesetzt werden, wobei dieser Überdruck durch das im Gärbehälter (1) bereitgestellte Kohlenstoffdioxid erzeugt wird, **dadurch gekennzeichnet, dass** die Anordnung eine Gasleitung (6), mit einem Überdruckventil (12) aufweist, welche, durch die Steuer- und/oder Regeleinrichtung, derart steuer- oder regelbar sind, dass ein konstanter Druck im Gärbehälter (1) und in der Abfüllvorrichtung (2) nach Aufbau eines voreingestellten Drucks gehalten wird.

2. Anordnung nach Anspruch 1, **dadurch gekennzeichnet, dass** der voreingestellte Druck im Bereich zwischen 1,5 bis 2,5 bar liegt.

3. Anordnung nach Anspruch 1 oder 2, **dadurch gekennzeichnet, dass** die Gasleitung (6) über eine Abfüllleitung (13) in einen Rohrstutzen (8) mündet, welcher ausgehend von einem Bodenbereich des Gärbehälters (1) in den Gärbehälter, insbesondere in den Gärbehälters (1), ragt, wobei dem Rohrstutzen (8) vorgelagert ein Ventil (11) angeordnet ist, welches einen Gasbereich von einem Flüssigkeitsbereich trennt, so dass bei Öffnen des Ventils (11) eine Abfüllung zumindest eines oder mehrerer Fässer der Abfüllvorrichtung (2) unter Druck erfolgt.

4. Anordnung nach einem der vorhergehenden Ansprüche, **dadurch gekennzeichnet, dass** Gärbehälter (1), Gasleitung (6), eines oder mehrere Fässer (5) und die Abfüllleitung (13) ein geschlossenes System bilden.

5. Anordnung nach einem der vorhergehenden Ansprüche **dadurch gekennzeichnet, dass** die Steuer- und/oder Regelvorrichtung derart ausgebildet ist, dass bei Öffnen des dem Rohrstutzen (8) vorgelagerten Ventils (11) die Gasleitung (6) beim Abfüllvorgang geöffnet ist.

6. Anordnung nach einem der vorhergehenden Ansprüche **dadurch gekennzeichnet, dass** die Anordnung eine Kühlvorrichtung oder einen am Gärbehälter angeordneten Doppelmantel (22) zur Kühlung des im Gärbehälter (1) bereitgestellten Kohlenstoffdioxids und bereitgestellten Biers aufweist, welche derart ausgebildet ist, dass eine Kühlung des Bieres zwischen 2°C und 10°C, vorzugsweise zwischen 2°C und 4°C erfolgt.

7. Anordnung nach einem der vorhergehenden Ansprüche **dadurch gekennzeichnet, dass** der Gärbehälter (1) eine Reinigungsvorrichtung mit einem Sprühkopf (21) aufweist, welcher vorzugsweise als Schwallreiniger ausgebildet ist und über welchen in entgegengesetzter Richtung das entstandene CO₂ abführbar ist.

8. Anordnung nach Anspruch 7, **dadurch gekennzeichnet, dass** jeweils ein Fass (5) einen Sack (34) aufweist, in welchen CO₂ und das Bier mediumsdicht aus dem Gärbehälter (1) einleitbar ist.

9. Anordnung nach Anspruch 8, **dadurch gekennzeichnet, dass** der Sack (34) einen Stechdeckel (37) mit einer Halteplatte (42) aufweist, welche in einer Öffnung eines Gehäuses (31) des Fasses (5) eingesetzt ist.

10. Anordnung nach einem der vorhergehenden Ansprüche 8 oder 9, **dadurch gekennzeichnet, dass** das Fass (5) einen Gasanschluss (35) aufweist zum Anschließen von Druckluft zur Gaseinleitung in den Zwischenraum zwischen Sack (34) und Gehäuse (31), ohne dass das eingeleitete Gas in im Sack (34) befindliche Bier in Kontakt kommt.

11. Anordnung nach Anspruch 10, **dadurch gekennzeichnet, dass** der Gasanschluss (35) besonders bevorzugt von der Halteplatte (42) beabstandet ist, so dass eine Gaseinleitung in den Zwischenraum zwischen Sack (34) und Gehäuse (31) radial zur Einleitungsrichtung des Bieres erfolgt.

12. Anordnung nach einem der vorhergehenden Ansprüche, **dadurch gekennzeichnet, dass** die Anordnung aus mehreren miteinander koppelbaren modularen Einheiten (100, 100') besteht, welche jeweils für sich ein geschlossenes System bilden.

13. Verfahren zum Betreiben einer Anordnung zum Vergären und Abfüllen von Bier nach einem der vorhergehenden Ansprüche, **dadurch gekennzeichnet, dass** während des Vergärungsprozesses sowohl der Gärbehälter (1) als auch die Abfüllvorrichtung (2) unter einen voreingestellten Überdruck gesetzt werden, wobei dieser Überdruck durch das im Gärbehälter bereitgestellte Kohlenstoffdioxid erzeugt wird, und wobei besonders bevorzugt der voreingestellte Überdruck während des Abfüllvorgangs konstant gehalten wird.

14. Verfahren nach Anspruch 13, **dadurch gekennzeichnet, dass** die Abfüllvorrichtung (2) zumindest ein Fass (5) aufweist, wobei der voreingestellte Überdruck während des Vergärungsprozesses in der Anordnung einschließlich dem Fass (5) durch unmittelbares Überleiten des Kohlendioxids vom Gärbehälter (1) in die Abfüllvorrichtung (2) eingestellt und während des Abfüllvorgangs konstant gehalten wird.

15. Vorrichtung zum Brauen umfassend einen Maischebehälter (100), einen Würzekochbehälter (200) und eine Anordnung zum Vergären und Abfüllen von Bier (300) nach einem der vorhergehenden Ansprüche.

## Claims

1. Arrangement for fermenting and bottling beer as part of a device for brewing,
wherein the arrangement comprises a fermentation vessel (1) and a bottling device (2), wherein the arrangement has a control and/or regulating device which is designed in such a way that both the fermentation vessel (1) and the bottling device (2) are subjected to a preset overpressure, wherein this overpressure is generated by the carbon dioxide provided in the fermentation vessel (1),
**characterized in that** the arrangement has a gas line (6) with a pressure relief valve (12), which can be controlled or regulated by the control and/or regulating device in such a way that a constant pressure is maintained in the fermentation vessel (1) and in the bottling device (2) after a preset pressure has been built up.

2. Arrangement according to claim 1, **characterized in that** the preset pressure is in the range between 1.5 and 2.5 bar.

3. Arrangement according to claim 1 or 2, **characterized in that** the gas line (6) opens via a filling line (13) into a pipe connection (8), which extends from a bottom area of the fermentation vessel (1) into the fermentation vessel, in particular into the fermentation vessel (1), wherein a valve (11) is arranged upstream of the pipe connection (8), which separates a gas area from a liquid area, so that when the valve (11) is opened, at least one or more barrels of the bottling device (2) are filled under pressure.

4. Arrangement according to one of the preceding claims, **characterized in that** the fermentation vessel (1), gas line (6), one or more barrels (5), and the filling line (13) form a closed system.

5. Arrangement according to one of the preceding claims, **characterized in that** the control and/or regulating device is designed in such a way that when the valve (11) upstream of the pipe connection (8) is opened, the gas line (6) is open during the bottling process.

6. Arrangement according to one of the preceding claims, **characterized in that** the arrangement has a cooling device or a double jacket (22) arranged on the fermentation vessel for cooling the carbon dioxide and beer provided in the fermentation vessel (1), which is designed in such a way that the beer is cooled to between 2°C and 10°C, preferably between 2°C and 4°C.

7. Arrangement according to one of the preceding claims, **characterized in that** the fermentation vessel (1) has a cleaning device with a spray head (21), which is preferably designed as a surge cleaner and via which the CO₂ produced can be discharged in the opposite direction.

8. Arrangement according to claim 7, **characterized in that** each barrel (5) has a bag (34) into which CO₂ and the beer can be introduced from the fermentation vessel (1) in a medium-tight manner.

9. Arrangement according to claim 8, **characterized in that** the bag (34) has a pierceable lid (37) with a retaining plate (42) which is inserted into an opening in a housing (31) of the barrel (5).

10. Arrangement according to one of the preceding claims 8 or 9, **characterized in that** the barrel (5) has a gas connection (35) for connecting compressed air for introducing gas into the intermediate space between the bag (34) and the housing (31) without the introduced gas coming into contact with the beer in the bag (34).

11. Arrangement according to claim 10, **characterized in that** the gas connection (35) is particularly preferably spaced apart from the retaining plate (42) so that gas is introduced into the intermediate space between the bag (34) and the housing (31) radially to the direction of introduction of the beer.

12. Arrangement according to one of the preceding claims, **characterized in that** the arrangement consists of a plurality of modular units (100, 100') that can be coupled together, each of which forms a closed system in itself.

13. Method for operating an arrangement for fermenting and bottling beer according to one of the preceding claims, **characterized in that** during the fermentation process, both the fermentation vessel (1) and the bottling device (2) are placed under a preset overpressure, which overpressure is generated by the carbon dioxide provided in the fermentation vessel, and wherein, in a particularly preferable manner, the preset overpressure is kept constant during the bottling process.

14. Method according to claim 13, **characterized in that** the bottling device (2) has at least one barrel (5), wherein the preset overpressure is set during the fermentation process in the arrangement including the barrel (5) by directly transferring the carbon dioxide from the fermentation vessel (1) into the bottling device (2) and is kept constant during the bottling process.

15. Device for brewing comprising a mash vessel (100), a wort boiling vessel (200) and an arrangement for fermenting and bottling beer (300) according to one of the preceding claims.

## Revendications

1. Installation de fermentation et de soutirage de bière faisant partie d'une installation de brassage, laquelle installation comprend une cuve de fermentation (1) et un dispositif de soutirage (2), l'installation comprenant un dispositif de commande et/ou de régulation qui est conçu de telle manière qu'aussi bien la cuve de fermentation (1) que le dispositif de soutirage (2) soient placés sous une surpression prédéfinie, cette surpression étant produite par le dioxyde de carbone fourni dans la cuve de fermentation (1), **caractérisée en ce que** l'installation comporte une conduite de gaz (6) munie d'une soupape à surpression (12) qui peut être commandée ou régulée par le dispositif de commande et/ou de régulation de telle manière qu'une pression constante soit maintenue dans la cuve de fermentation (1) et dans le dispositif de soutirage (2) après l'établissement d'une pression prédéterminée.

2. Installation selon la revendication 1, **caractérisée en ce que** la pression prédéterminée est comprise entre 1,5 et 2,5 bars.

3. Installation selon la revendication 1 ou 2, **caractérisée en ce que** la conduite de gaz (6) débouche via une conduite de soutirage (13) dans un piquage de tuyau (8) qui dépasse dans la cuve de fermentation (1) à partir d'une région de fond de la cuve de fermentation, en particulier dans la cuve de fermentation (1), le piquage de tuyau (8) étant précédé d'une vanne (11) qui sépare une zone gazeuse d'une zone liquide de sorte que, lors de l'ouverture de la vanne (11), un ou plusieurs fûts du dispositif de soutirage (2) sont remplis sous pression.

4. Installation selon l'une des revendications précédentes, **caractérisée en ce que** la cuve de fermentation (1), la conduite de gaz (6), un ou plusieurs fûts (5) et la conduite de soutirage (13) forment un système fermé.

5. Installation selon l'une des revendications précédentes, **caractérisée en ce que** le dispositif de commande et/ou de régulation est conformé de telle manière que, lors de l'ouverture de la vanne (11) précédant le piquage de tuyau (8), la conduite de gaz (6) est ouverte pendant l'opération de soutirage.

6. Installation selon l'une des revendications précédentes, **caractérisée en ce qu'**elle comporte un dispositif de réfrigération ou une double enveloppe (22) disposée sur la cuve de fermentation pour refroidir le dioxyde de carbone fourni dans la cuve de fermentation (1) et la bière fournie, qui est conformé de telle manière que la bière soit refroidie entre 2 °C et 10 °C, de préférence entre 2 °C et 4 °C.

7. Installation selon l'une des revendications précédentes, **caractérisée en ce que** la cuve de fermentation (1) comprend un dispositif de nettoyage avec une tête de pulvérisation (21), qui est de préférence conçu comme un nettoyeur à jet d'eau et via lequel le CO₂ fourni peut être extrait dans le sens opposé.

8. Installation selon la revendication 7, **caractérisée en ce qu'**un fût (5) comporte un sac (34) dans lequel du CO₂ et de la bière peuvent être introduits de façon étanche aux fluides dans la cuve de fermentation (1).

9. Installation selon la revendication 8, **caractérisée en ce que** le sac (34) comporte un couvercle perforable (37) avec une plaque de maintien (42), qui est introduit dans une ouverture d'un corps (31) du fût (5).

10. Installation selon l'une des revendications précédentes, 8 ou 9, **caractérisée en ce que** le fût (5) comporte un raccord de gaz (35) pour raccorder de l'air comprimé afin d'introduire du gaz dans l'espace entre le sac (34) et le corps (31) sans que le gaz introduit vienne en contact avec la bière qui se trouve dans le sac (34).

11. Installation selon la revendication 10, **caractérisée en ce que** le raccord de gaz (35) est de préférence écarté de la plaque de maintien (42), de sorte que le gaz est introduit dans l'espace entre le sac (34) et le corps (31) dans le sens radial par rapport au sens d'introduction de la bière.

12. Installation selon l'une des revendications précédentes, **caractérisée en ce qu'**elle se compose de plusieurs unités modulaires (100, 100') pouvant être couplées entre elles, qui forment chacune un système fermé.

13. Procédé pour la conduite d'une installation pour la fermentation et le soutirage de bière selon l'une des revendications précédentes, **caractérisé en ce que**, pendant le processus de fermentation, aussi bien la cuve de fermentation (1) que le dispositif de soutirage (2) sont placés sous une surpression prédéterminée, laquelle surpression est produite par le dioxyde de carbone fourni dans la cuve de fermentation et laquelle surpression prédéterminée est en particulier maintenue constante pendant l'opération de soutirage.

14. Procédé selon la revendication 13, **caractérisé en ce que** le dispositif de soutirage (2) comporte un fût (5), la pression prédéterminée étant ajustée pendant le processus de fermentation dans l'installation, y compris le fût (5), par le transfert direct du dioxyde de carbone de la cuve de fermentation (1) au dispositif de soutirage (2) et maintenue constante pendant l'opération de soutirage.

15. Installation de brassage comprenant une cuve de trempe (100), une cuve de cuisson du moût (200) et une installation pour la fermentation et le soutirage de bière (300) selon l'une des revendications précédentes.
